# EUROPEAN PATENT APPLICATION

(11) **EP 2 782 287 A1**
(43) Date of publication of application: **24.09.2014**
(21) Application number: 13305336.3
(22) Date of filing: 20.03.2013
(51) Int. Cl.: H04L 5/00

(54) **Methods and devices for network assisted beaconing**

(71) Applicant: ALCATEL LUCENT, 92100 Boulogne-Billancourt (FR)
(72) Inventor: Doetsch, Uwe, 70435 Stuttgart (DE); Fonseca dos Santos, André, 70435 Stuttgart (DE); Wild, Thorsten, 70435 Stuttgart (DE); Schaich, Frank, 70435 Stuttgart (DE)
(74) Representative: Lück, Stephan

(57) **Abstract**

The present invention refers to methods (49, 73) and devices (20, 21, 25) for network assisted beaconing. In order to provide a method (49, 73) or device (20, 21, 25 for network assisted beaconing that can be easily integrated in existing wireless networks (11) without the need for extensive modification of the existing networks (11) and that operate efficiently showing little radio transmission resource consumption it is suggested that the method comprise instructing (55) a first radio terminal (25; UE1) to transmit a beacon signal; and indicating (57) a portion of radio transmission resources (39) occupied at least partially by the beacon signal to at least one second radio terminal (25; UE2, UE3, UE4, UE5); wherein the method (49) comprises subdividing the radio transmission resources according to frequency and time into multiple resource blocks (RB) and wherein the beacon signal is a sounding reference signal (SRS) to be transmitted by the first radio terminal (25; UE1) during a defined time interval (47) covering a frequency range (F) that comprises at least one resource block (RB).

## Description

### Field of the invention

The present invention refers to a method and device for network assisted beaconing. Furthermore, the invention refers to a wireless network comprising such devices.

### Background

In known cellular radio access networks such as the Long Term Evolution (LTE) access network or the UMTS Radio Access Network (UTRAN), terminals registered with the same radio cell communicate with each other over a base station.

In order to allow for a more efficient communication between terminals that are located close to each other, device to device communication may be performed with the terminals exchanging data directly with each other without using a base station for relaying the data. Device to device communication may be network assisted, i.e. a cellular access network may coordinate the direct data communications between the individual terminals. In particular, establishing of device-to-device links, resource allocation and reliability control may be performed by the network, whereas the data exchange on a device-to-device link may be carried out directly between the devices without routing the data to be exchanged over the base station or another network element of an access network.

Prior to the establishment of a device-to-device link, the network needs to know which radio terminals registered with the cellular access network are located sufficiently close to each other so that device-to-device communication can be carried out between these terminals. In other words, peer discovery and channel state information estimation procedures are required.

### Summary

The object of the present invention is to provide a method or device for network assisted beaconing that can be easily integrated in existing wireless networks without the need for extensive modification of the existing networks and that operate efficiently showing little radio transmission resource consumption.

According to a preferred embodiment of the present invention, a method for network assisted beaconing in a wireless network is provided, the method comprising instructing a first radio terminal to transmit a beacon signal; and indicating a portion of radio transmission resources occupied at least partially by the beacon signal to at least one second radio terminal; wherein the method comprises subdividing the radio transmission resources according to frequency and time into multiple resource blocks and wherein the beacon signal is a sounding reference signal to be transmitted by the first radio terminal during a defined time interval covering a frequency range that comprises at least one resource block, preferably multiple adjacent resource blocks. The method may include instructing the second radio terminal to receive a signal on the portion of radio transmission resources indicated to the second terminal.

Existing wireless communication systems, such as LTE, already use the sounding reference signal to measure cellular radio link, i.e. a link between a radio terminal and a base station. By providing a method or device comprising instructing the second terminal to listen to the sounding reference signal, peer discovery and channel estimation related to device-to-device links can be easily implemented requiring only few modifications of existing systems.

The present method is not only simple to implement but also causes little overhead in terms of radio transmission resources usage because the same reference signal is used for estimating a cellular channel between a terminal and a base station and device-to-device channels between the terminal and neighboring terminals.

In an embodiment, the radio transmission resources are uplink transmission resources. In particular the uplink resources may be used for device-to-device communications.

In an embodiment, the indicating the portion of radio transmission resources comprises informing the second radio terminal about a time interval during which the beacon signal shall be transmitted. The time interval may be e.g. a subframe or a slot in which the sounding reference signal is transmitted.

In an embodiment, the method comprises receiving from the at least one second radio terminal measurement data describing a signal received by the second radio terminal on the indicated portion of radio resources and estimating a quality of a device-to-device channel between the first terminal and the second terminal. For example, the measurement data may describe a performance of a potential communication if a link would be set up on the measured device-to-device channel. In an embodiment, the measurement data comprise a channel quality indicator describing the quality of a channel between the first terminal and the second terminal.

In an embodiment, the method comprises estimating an interference of the potential communication performed on the device-to-device channel to at least one further channel. The further channel may be a further device-to-device channel or a cellular channel (i.e. a device-to-base-station channel).

In an embodiment, the method comprises assigning radio resources to communication channels of the network depending on the estimated channel quality and/or the estimated interference. That is, scheduling decisions related to the radio transmission resources may be based on the estimated channel quality and/or the estimated interference. By performing this type of scheduling, spatial reuse of transmission resources can be improved and interference between different cellular or device-to-device channels can be reduced. By using the sounding reference signal, frequency selective interference estimation is possible. Moreover, transmission power aware scheduling can be carried out based on the measurement information in order to save battery power.

For example, the method may comprise deciding on whether communication between radio terminals shall be carried out on a device-to-device channel or a cellular channel, wherein said deciding depends on the estimated channel quality and/or the estimated interference.

Preferably, the sounding signal may comprise a sounding reference signal according to the specification of the Evolved Universal Terrestrial Radio Access (E-UTRAN).

According to another preferred embodiment, a network element (e.g. a base station) for a wireless network is provided, the network element being operable for instructing a first radio terminal to transmit a beacon signal; and indicating a portion of radio transmission resources occupied at least partially by the beacon signal to at least one second radio terminal; wherein the network element is further operable for subdividing the radio transmission resources according to frequency and time into multiple resource blocks and wherein the beacon signal is a sounding reference signal to be transmitted by the first radio terminal during a defined time interval covering a frequency range that comprises at least one resource block, preferably multiple adjacent resource blocks.

Preferably, the network element is operable, preferably programmed, for executing the method for network assisted beaconing described herein. To this end, a computer program product comprising a computer program may be provided. The computer program may be programmed such that a computer, e.g. a processor of the network element, executes the above-described method when running the computer program. The computer program may be stored on a computer readable storage medium like semiconductor storage (e.g. Flash memory, ROM, RAM, etc.), magnetic storage (e.g. discs or tapes) or optical storage (e.g. optical discs).

According to yet another preferred embodiment, a further method for network assisted beaconing in a wireless network is provided, the method comprising receiving an instruction indicating a portion of radio transmission resources occupied by a beacon signal; receiving a signal on the portion of radio transmission resources indicated in said instruction; and transmitting measurement data that characterize the received signal; wherein the radio transmission resources are subdivided according to frequency and time into multiple resource blocks and wherein indicated portion of radio transmission resources covers a frequency range that comprises at least one resource block, preferably multiple adjacent resource blocks.

Preferably, the signal is received from a terminal of the network and wherein the measurement data comprise a channel quality indicator describing the quality of a channel to the terminal. The channel quality indicator may comprise a signal strength value describing a strength of the received signal.

According to still another preferred embodiment of the invention, a radio terminal for a wireless communication network is provided, wherein the terminal is operable for receiving an instruction indicating a portion of radio transmission resources occupied by a beacon signal; receiving a signal on the portion of radio transmission resources indicated in said instruction; and transmitting measurement data that characterize the received signal; wherein the radio transmission resources are subdivided according to frequency and time into multiple resource blocks and wherein indicated portion of radio transmission resources covers a frequency range that comprises at least one resource block, preferably multiple adjacent resource blocks.

In an embodiment, the radio terminal is operable, preferably programmed, for executing the further method described herein. A further computer program product comprising a further computer program may be provided. The further computer program may be programmed such that a computer, e.g. a processor of the terminal, executes the above-described method when running the computer program. The further computer program may be stored on a computer readable storage medium like semiconductor storage (e.g. Flash memory, ROM, RAM, etc.), magnetic storage (e.g. discs or tapes) or optical storage (e.g. optical discs).

According to a further preferred embodiment, a wireless network, preferably a wireless access network comprising a network element described herein is provided.

### Brief description of the figures

Exemplary embodiments and further advantages of the present invention are shown in the Figures and described in detail hereinafter.
- Figure 1: shows a communication network according to an embodiment of the present invention;
- Figure 2: shows the allocation of radio transmission resources to a sounding reference signal;
- Figure 3: shows a flowchart of a first method for network assisted beaconing;
- Figure 4: shows a flowchart of a second method for network assisted beaconing;
- Figure 5: illustrates a beaconing procedure; and
- Figure 6: shows communication channels between terminals and the base station of the network shown in Figure 1.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

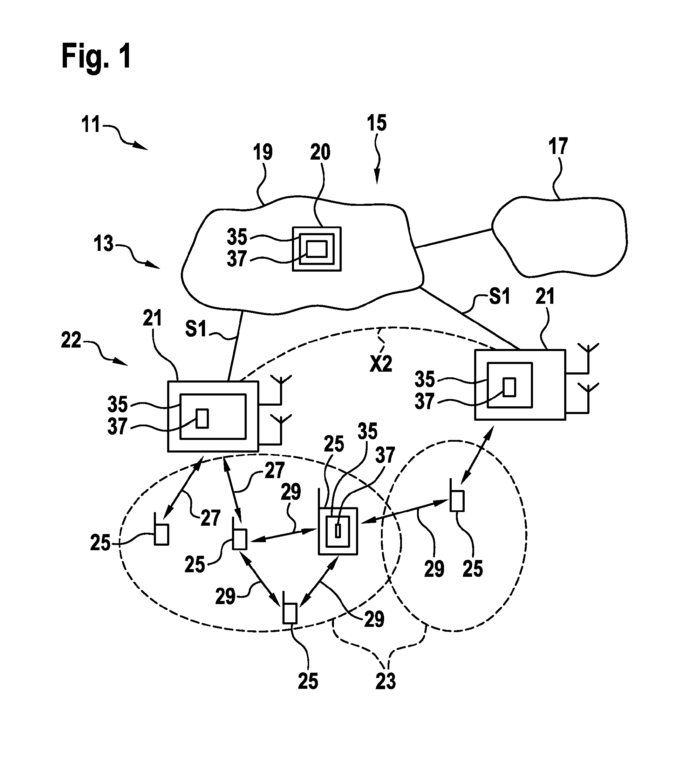

Figure 1 shows a communication network 11 comprising a fixed part 13 of a mobile communication system 15 connected to a wide area network 17 such as the Internet. The fixed part 13 has a backhaul network 19 to which one or more access network elements, such as base stations 21, are connected. The backhaul network 19 may further comprise a further network element 20 that may be connected to the backhaul network 19 or - as shown in Figure 1 - be part of the backhaul network 19. In addition, the mobile communication system 15 may comprise a core network (not shown). In addition, the core network may include at least one further network element. The base stations 21 are part of an access network 22 which is connected by the backhaul network 19 to the core network.

In the shown embodiment, the mobile communication system 15 is a cellular system and a coverage area of the system 15 is subdivided in multiple radio cells 23, where neighbouring radio cells 23 may overlap each other as shown in Figure 1. Each radio cell 23 of the system 15 is managed by one base station 21. For managing a radio cell 23, the base station 21 may transmit cellular beacon signals or cellular pilot signals that allow for discovering the radio cells 23. In particular, a radio terminal 25 of the system 15 may scan the radio spectrum for the beacon signal or pilot signal transmitted by the base stations 21 in order to detect the cells 23 defined by the respective base station 21 and for synchronizing itself with the base station 21.

Managing a radio cell 23 may include subdividing the total amount of radio resources assigned to the cell 23 or to the whole system 15 (e.g. one or more radio frequency bands) into multiple portions of radio resources. For example, the radio resources may be subdivided according to time, e.g. by assigning defined time intervals to the individual portions of radio resources. For this end, the base station 21 may define a framing structure. Moreover, the radio resources may be subdivided according to frequency by defining comparatively small frequency ranges that correspond to portions of radio transmission resources. Typically, both approaches (subdivision according to time and subdivision according to frequency) are combined and a portion of radio resources is defined by a time interval and a frequency range.

In the shown embodiment, the mobile communication system 15 is a Long Term Evolution (LTE) system or a LTE advanced system that has been extended with functions related to device-to-device communication. In the context of LTE, the base stations 21 are also referred to as eNodeB, the wireless terminals 25 are also referred to as User Equipment (UE). An interface between the base stations 21 and network elements 20 of a core network is referred to as S1 interface. An interface used for inter base station communication is referred to as X2 interface. Although the present embodiments are based on LTE, the application of the present invention is not limited to this system. It can also be applied in connection with other mobile communication systems such as UMTS or WCDMA.

The system 15 supports classical cellular communication as known from existing systems such as LTE, UMTS, etc. For cellular communication, a cellular communication channel 27 is established between a terminal 25 and a base station 21. In existent systems, terminals 21 communicate over cellular channels 27 via a base station 21 even if they are located close to each other and could communicate with each other directly without sending data over the cellular channels 27.

It is currently discussed to provide future wireless communication systems (so-called fifth generation or 5G systems) with functions that allow for direct communication between the terminals 25 without convoying the data to be communicated to the base station 21. Direct communication between terminals 25 is also referred to as Device-To-Device (D2D) communication. For device-to-device communication, a device-to-device channel 29 may be established between two terminals 25. However, device-to-device channels 29 can only be established if the terminals 25 that want to communicate directly with each other are located close enough to each other so that direct radio communication is possible. In order to identify pairs or groups of terminals 25 that can perform device-to-device communication, peer discovery or device device-to-device channel state estimation procedures must be carried out (further also referred to as "channel estimation"). In the shown embodiment, the base stations 21 are involved in these procedures. Generally, systems 15 that allow for device-to-device communication and include network elements 20, 21 of the fixed part 13 of the system into management and/or control functions of device-to-device communication, are referred to as system that perform network-assisted device-to-device communication. That is, the management and/or control of the device-to-device communication, in particular discovery and assignment of radio resources used for device-to-device communication, is supported by the network, whereas the terminals 25 exchange the payload data directly over a device-to-device channel 29 without involving a base station 21.

For efficient device-to-device communication, discovery and estimation of the device-to-device channels 29 must be fast and should not consume a large amount of radio resources. Some approaches for channel discovery that are currently under discussion consider either the exploitation of some information that might be available in the system 15 such as the estimated location of the individual terminals 25 or they rely on the transmission of beacon signals between the terminals 25 and the base stations 21. However, location-based approaches do not provide reliable information on the device-to-device channels 29 and beacon signals consume a significant amount of radio resources.

However, at the present, no solution is provided on how to integrate a beaconing procedure for device-to-device communication in existing cellular networks which are optimized for cellular only communication. In particular, a beaconing method for device-to-device communication should not only be integrated in existing networks but also coexist with existing cellular procedures. In addition, the method should consume as little radio transmission resources as possible.

In the following, methods for network assisting beaconing are described that is based on a sounding reference signal transmitted by a terminal 25. A sounding reference signal is a signal transmitted during a defined time interval covering a frequency range that typically comprises multiple resource blocks of transmission resources. As a consequence, the sounding reference signal has a comparatively large bandwidth and can therefore be used for frequency selective channel estimation.

The methods described herein can be applied in combination with any existing radio system that subdivides transmission resources according to frequency and time into multiple resource blocks. In particular, the methods may be applied in combination with networks that separate the transmission resources in uplink radio transmission resources and downlink radio transmission resources. For example, this separation can be performed by assigning different frequency ranges to uplink transmission resources and downlink transmission resources respectively (Frequency Division Duplex, FDD). However, the methods can also be used in connection with networks that separate the uplink transmission resources and downlink transmission resources by assigning different time intervals to them (Time Division Duplex, TDD).

A first exemplary method may executed by a network element of the network 11. Accordingly, the base stations 21 or the further network elements 20 may include a processor 35 arranged for executing the first method. In an embodiment, the processor 35 may comprise a programmable computer having a storage element 37. A computer program may be stored on this storage element 37, which computer program may be programmed for executing the first method.

Similarly, the radio terminals 25 may comprise a further processor 35 arranged for executing a second exemplary method. The further processor 35 may comprise a programmable computer including a further storage element 37. A further computer program may be stored on the further storage element 37, which computer program is programmed for executing the second method when run by the further processor 35. In Figure 1, the further processor 35 and the further storage element 37 are labelled with the same reference signs as the processor 45 and the storage element 47 of the base stations 21 or the at least one further network element 20 of the core or access network.

In the shown embodiment, the methods are applied in combination with the Long Term Evolution (LTE) system, in particular with radio the access defined for LTE, also referred to as Evolved Universal Terrestrial Radio Access (E-UTRA). According to the technical specification of E-UTRA, the radio transmission resources are subdivided into Resource Blocks (RBs), which are further subdivided in Resource Elements (REs), forming a so-called resource grid.

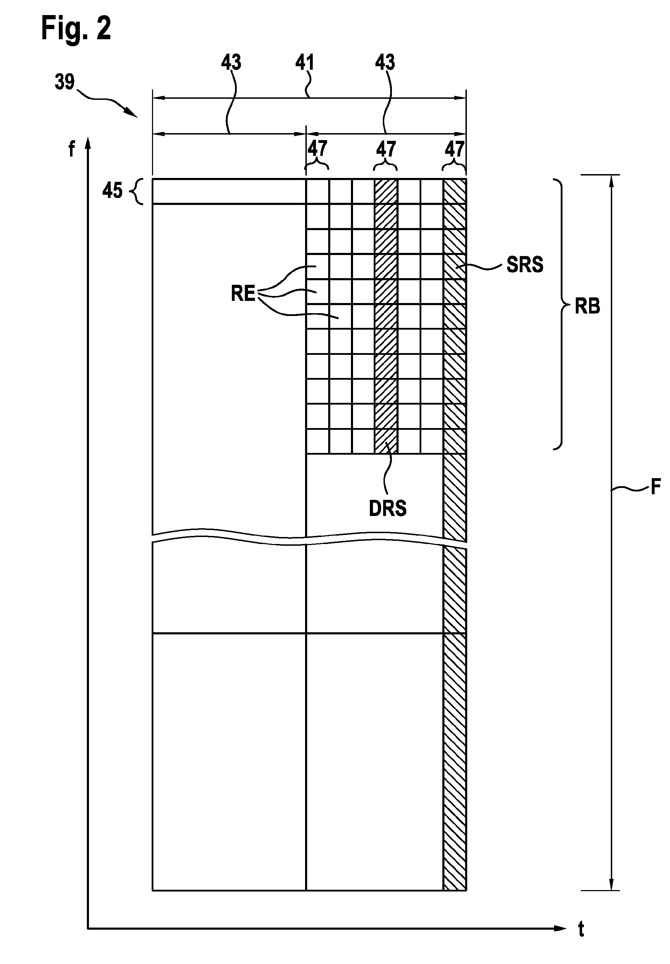

Figure 2 shows the resource grid of uplink radio transmission resources 39 of LTE. The uplink resources 39 are subdivided in the time and domain (t-axis) into frames (not shown) and subframes 41. A subframe 41 comprises two consecutive slots 43. Furthermore, the radio transmission resources 39 are subdivided into multiple subcarriers 45 in the frequency domain (f-axis). A certain number of consecutive subcarriers 37 and a single slot 43 form a resource block RB. A slot 43 is further subdivided into multiple symbols 47. As a consequence, a radio block RB can be further subdivided into multiple resource elements RE, with one resource element RE corresponding to a single subcarrier 37 and a single symbol 39. In the uplink of LTE, Single Carrier Frequency Division Multiple Access (SC-FDMA) is used and the symbol 39 is therefore also referred to as SC-FDMA symbol.

In the exemplary diagram of Figure 2, a frequency range F of four consecutive resource blocks RB is shown. Depending on configuration information from higher layers, the last symbol 39 of at least some subframes 33 are used for the transmission of a sounding reference signal SRS covering the frequency range F of a certain number of resource blocks RB, typically four resource blocks RB or more. Covering a frequency range means that at least some resource elements RE of each resource block RB belonging to the frequency range F are used for the transmission of the sounding reference signal SRS. For example, every second resource element RE may be allocated for the transmission of the sounding reference signal, resulting in a comb-like allocation of the resource elements RE to the sounding reference signal. The sounding reference signal SRS may be received and analysed by a base station 21 in order to estimate the quality of an uplink cellular channel 27 between a terminal 25 and the base station 21.

A resource block RB used for uplink transmissions for the terminal 25 to a base station 21 comprises a demodulation reference signal DRS that includes a sequence known by the receiver (i. e. the base station 21) and is used for coherent demodulation of the signal transmitted in the resource block RB. The demodulation reference signal DRS may cover a single resource block RB only whereas the sounding reference signal SRS covers multiple resource blocks in the frequency domain. More detailed information about the radio transmission resource grid and the sounding reference signal SRS can be found in the technical specification 3GPP TS 36.211 issued by the 3rd Generation Partnership Project (3GPP) as a part of the LTE standard.

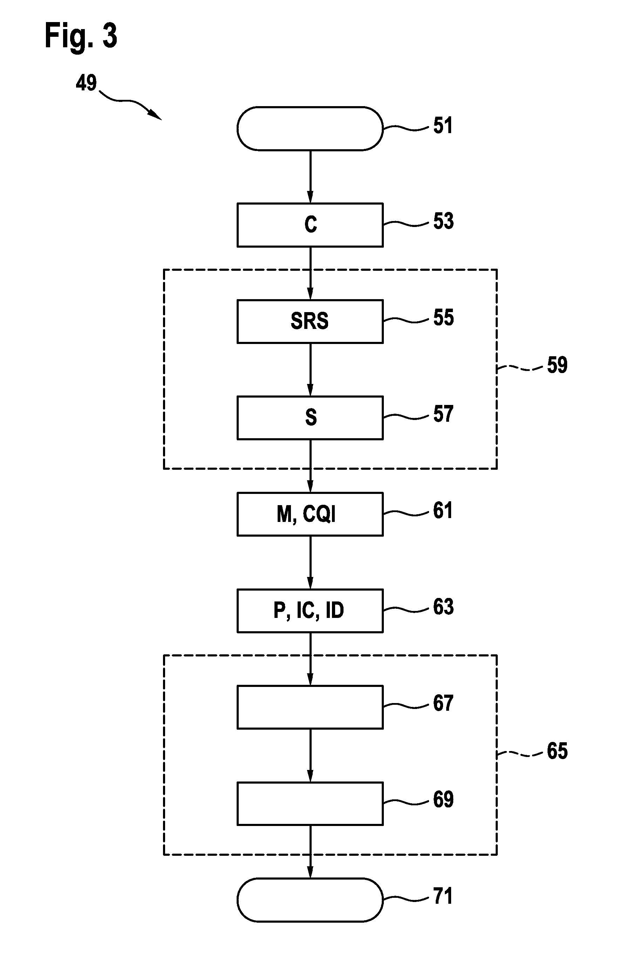

Figure 3 shows the first method 49 for network assisted beaconing that uses the sounding reference signal SRS available in some existing cellular networks like LTE for estimating a cellular channel 27 also for peer discovery and device-to-device channel estimation. When applying the first method 49, a single reference signal SRS can be used for both cellular channel estimation and device-to-device channel information. As a consequence, the first method 49 consumes little radio transmission resources 31. In particular, if the network 11 is already performing a sounding procedure for estimation of a cellular channel 27, no additional radio transmission resources, in particular uplink resources 39, are required for carrying out the first method 41. In a preferred embodiment, the first method 41 is executed on a base station 21 or another network element of the network 11 such as the further network element 20.

After a start 51 of the first method 49, a step 53 is executed for identifying a candidate set C of terminals 25 that are possibly inside a given geometric area, e. g. within a radio cell 23 or the coverage area of two or more neighbouring radio cells 23. Step 53 may comprise analysing any kind of information related to the location of the terminals 25 that may be available in the network 11 in order to identify the candidate set C of terminals 25 that possibly can communicate with each other over device-to-device channels 29.

After the candidate set C has been identified, step 55 is executed for instructing at least one first radio terminal 25 to transmit a sounding reference signal SRS on the uplink transmission resources 31 of the network 11. Step 55 may include indicating to the first radio terminal 25 a portion of uplink radio transmission resources 31 to be used for transmitting the sounding reference signal, e. g. by indicating a time interval such as a subframe 41 or a slot 43 within a framing structure of the network 11 to be used for the transmission of the sounding reference signal SRS. Furthermore, step 55 may include indicating the frequency range F that shall be covered by the sounding reference signal SRS. Step 55 may use radio resource control (RRC) signalling for transmitting that instruction and any information included therein to the first radio terminal 25.

The method 49 comprises a step 57 that instructs at least one second radio terminal 25 to receive a signal S on the portion of uplink transmission resources 39 on which the at least one first terminal shall transmit the sounding reference signal SRS. That is, the at least one second terminal 25 receives the sounding reference signal SRS transmitted by the at least one first terminal 25 rather than the base station 21. However, in an embodiment, the base station 21 may receive the sounding reference signal SRS too. In this embodiment, a single reference signal is used for both cellular channel estimation and device-to-device channel estimation.

In a preferred embodiment, the at least one first terminal 25 and/or the at least one second terminal 25 is selected from the candidate set C. Furthermore, in an embodiment, not only information about the portion of uplink resources 39 used for the transmission of the sounding reference signal SRS may be communicated to the first and second terminals 25 but also information about the content of the sounding reference signal SRS may be communicated to the terminals 25. In particular, information about a reference sequence transmitted in the sounding reference signal SRS may be communicated such as an identifier (sequence ID) of the reference sequence. The RRC signalling procedures of the network 11 may be extended in order to allow for transmitting the above described information to the first or second terminals 25.

Steps 55 and 57 constitute a block 59 of the first method 49 for configuring device-to-device channel estimation they based on the sounding reference signal SRS. After block 59 has been carried out, a step 61 is executed for receiving from the at least one second terminal measurement data M that describe the received signal. The measurement data M may comprise a channel quality indicator CQI comprising a value describing a signal strength of the signal S received by the radio terminal 25. Because the second terminal 25 is instructed in step 57 to receive on the same portion of uplink transmission resources 39 indicated to the first terminal in step 55, the measurement data M describe the sounding reference signal SRS received by the at least one second terminal 25.

Based on the measurement data M, a step 63 determines at least one metric that characterizes the impact or performance of communication performed on a device-to-device channel 29 between the first terminal 25 and the second terminal 25. The metric may include a performance metric P describing the performance of a potential communication between the first and second terminals 25 on a device-to-device channel 29 between these terminals, a metric IC describing an impact in terms of interference of the potential communication over that device-to-device channel 29 to a cellular channel 27 between the same or different terminal 25 and the base station 21 and/or a metric ID describing the impact in terms of interference of the potential communication on that device-to-device channel 29 on further device-to-device channels 29, preferably to further device-to-device channels 29 that are already used for device-to-device communication.

The metrics P, IC and/or ID determined in step 63 may be used by a block 65 of the first method 49 in order to optimize scheduling, i.e. assigning radio-transmission resources, in particular the uplink transmission resources 39, to device-to-device channels 29 or cellular channels 27. In particular, scheduling decisions may be made by considering simultaneously both cellular channels 27 as well as device-to-device channels 29 thereby improving the overall efficiency of the network 11. In an embodiment, block 65 or the entire first method 49 may be part of a scheduler implemented in hardware and/or software e. g. as a part of the base station 21 or another network element of the network 11.

Block 65 may comprise a step 67 for assigning radio resources (e.g. resource blocks RB of the uplink transmission resources 39) to the cellular channels 27 and device-to-device channels 29 depending on the metrics determined in step 63 that characterize an estimated link quality and/or an estimated interference.

Furthermore, block 65 may comprise a step 69 that decides whether a communication between particular pair of radio terminals 25 or a group of radio terminals 25 shall be carried out on a device-to-device channel 27 or a cellular channel 27. The decision performed in step 69 may be based on the measurement data M or the metrics P, IC, ID determined in step 63 depending on the measurement data M. The order of executions of steps 67 and 69 may be reversed. In an embodiment, the operations of steps 67 and 69 may be executed in parallel or simultaneously.

After the execution of block 65, the first method 49 is terminated in a step 71. In a preferred embodiment, the method 49 is executed repeatedly, preferably each time device-to-device communication is requested by applications, when terminals 25 have moved and/or channel conditions may have changed. In an embodiment, the method 49 may be executed periodically.

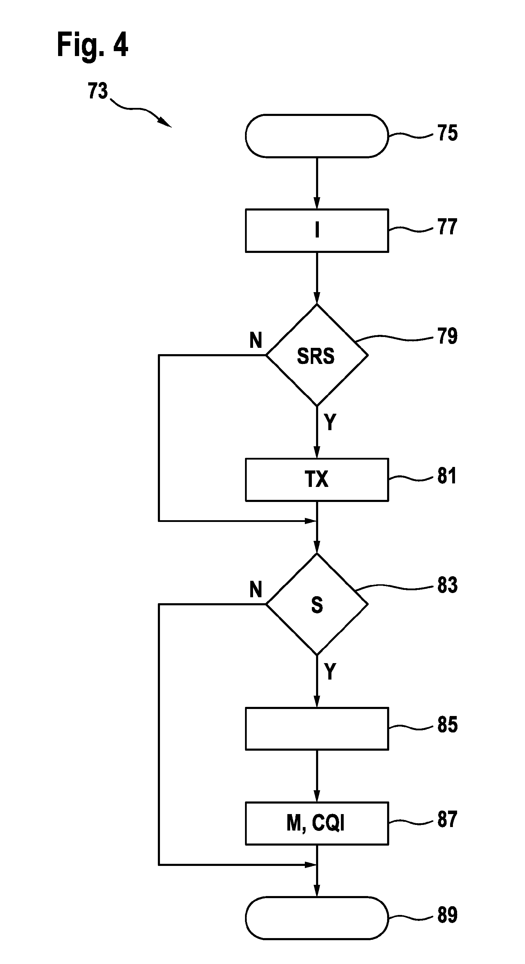

Figure 4 shows the second method 73. The second method may 73 be executed on a terminal 25 so that the terminal 25 may be instructed to receive and analyse the sounding reference signal SRS and transmit back to the network 11 the measurement data M. In order to implement the second method 73, a computer program may be provided that may be stored on the storage element 73 of at least one terminal 25.

After a start 75, a step 77 is executed for receiving an instruction I from the network 11. The instruction I may be received via RRC signalling. In an embodiment, the existing signalling of the network 11, in particular signalling relating to the transmission of the sounding reference signal SRS of LTE, may be extended or re-defined so that the RRC signalling can be used in combination with the methods 49, 73 described herein.

A branch 79 checks whether the instruction I comprises configuration information instructing the terminal 25 to transmit a sounding reference signal SRS. If so (Y), a step 81 is executed for transmitting the sounding reference signal SRS, preferably on a portion of uplink transmission resources 39 indicated in the instruction I. Otherwise (N), step 81 is skipped.

Furthermore, the second method 73 comprises a further branch 83 that checks whether the instruction I comprises information instructing the terminal 25 to receive the signal S on uplink transmission resources 39 indicated in the instruction I. If so (Y) then steps 85 and 87 of the second method 73 are executed. Otherwise (N) these steps 85, 87 are skipped.

Step 85 receives the signal S on the portion of uplink transmission resources 39 indicated in the instruction I and step 87 generates and transmits a measurement report M back to the network 11, preferably to a base station 21. The measurement report M characterizes the received signal S. The measurement data M may comprise a channel quality indicator CQI describing the quality of a device-to-device channel 29. In particular, the channel quality indicator CQI may comprise a signal strength value describing the strength of the received signal S.

It should be noted that the terminal 25 that executes the second method 73 has the role of the first terminal 25 described above in connection with the first method 49 if it is instructed to transmit a sounding reference signal SRS. If the terminal 25 is instructed to receive the signal S and to generate the measurement data M, then the terminal 25 has the role of the second terminal 25 described above. A single terminal 25 may be instructed to both transmit a sounding reference signal SRS as well as to receive a signal S and generate and report the related measurement data M. In other words, in an embodiment, at least one terminal 25 of the candidate set C may transmit a sounding reference signal SRS and receive the signal S. However, the portions of uplink transmission resources 39 (e. g. frequency range F) or subframe 41 may be different for the transmission of the sounding reference signal SRS and for receiving the signal S, respectively.

In step 89, the second method 73 is terminated. In a preferred embodiment, the second method 73 is executed repeatedly so that multiple instructions I may be processed.

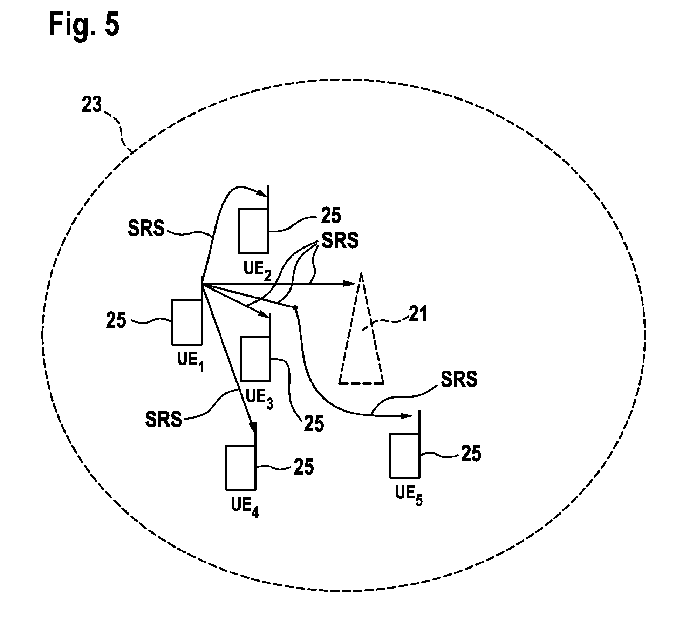

Figure 5 shows how the methods 49, 73 for network assisted beaconing described herein basically work. A first terminal 25 labelled with UE₁ is instructed by the first method 49 to transmit sounding reference signal SRS. The second terminals 25 labelled with UE₂, UE₃, UE₄ and UE₅ are instructed by the first method 49 to receive the signal S and therefore generate measurement data M related to the sounding reference signal SRS. In particular, the second terminals UE₂, UE₃, UE₄, UE₅ estimate the received power strength or any other type of channel quality indicator CQI based on the received signal S. The second terminals UE₂, UE₃, UE₄, UE₅ feed this information about the received signal back to the base station 21 which is executing the first method 49.

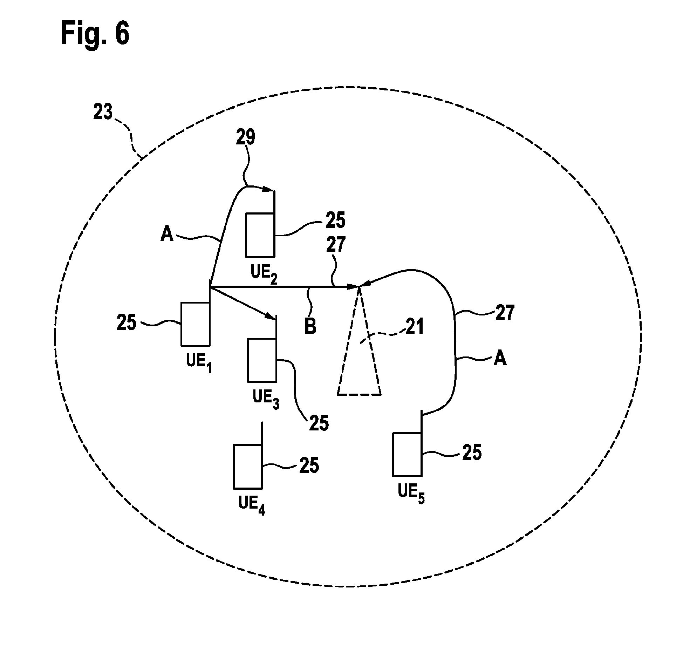

Figure 6 shows an exemplary allocation of uplink transmission resources 39 to a device-to-device channel 29 and to cellular channels 27. In particular, block 65 of the first method 49 has allocated a first portion A of uplink transmission resources 39 to the device-to-device channel 29 between the terminals 25 labelled with UE₁ and UE₂. The same portion A of uplink transmission resources 39 are assigned to a cellular uplink channel 27 between the terminal 25 labelled with UE₅ and the base station 21. A different second portion B ≠ A of uplink transmission resources 39 has been assigned to a further cellular uplink channel 27 between the terminal 25 labelled with UE₁ and the base station 21. This allocation is a result of analysing the metrics P, IC and/or ID determined in step 63 depending on the measurement data M received in step 61. In the scenario shown in Figure 6, block 65 has detected that there is little interference between the device-to-device channel 29 and the uplink channel 27 between the terminal UE₅ and the base station 21. As a consequence, the same portion A of the uplink transmission resources 39 can be assigned to these channels 27, 29 thereby allowing for spatial reuse of the first portion A of uplink transmission resources 39 for both cellular and device-to-device communication.

To sum up, the methods and devices described herein define a beaconing procedure that can be applied in combination with existing cellular networks such as LTE. Basically, an existing sounding procedure using already specified sounding reference signals SRS is extended so that device-to-device channel discovery and estimation is possible using the sounding reference signals SRS. To this end, RRC signalling may be extended. The methods described herein can be rather easily implemented and require comparatively little modification of the existing system. Moreover, they operate efficiently because the same sounding reference signal SRS can be used simultaneously for estimation of device-to-device channels 29 and cellular channel 27. Moreover, the methods and devices herein improve the scheduling of the network 11. Measurement data obtained by means of the beaconing method described herein may be used by the network 11, in particular by a base station 21, in order to make scheduling decisions on which portions radio transmission resources, in particular uplink transmission resources 39, are assigned to which channels 27, 29. By performing scheduling decisions for cellular communication and device-to-device communication simultaneously, the uplink transmission resources 39 can be used more efficiently, e. g. by exploiting possibilities for spatial reuse of a portion A of transmission resources.

## Claims

1. Method (49) for network assisted beaconing in a wireless network (11), the method (49) comprising
- instructing (55) a first radio terminal (25; UE₁) to transmit a beacon signal; and
- indicating (57) a portion of radio transmission resources (39) occupied at least partially by the beacon signal to at least one second radio terminal (25; UE₂, UE₃, UE₄, UE₅);
wherein the method (49) comprises subdividing the radio transmission resources according to frequency and time into multiple resource blocks (RB) and wherein the beacon signal is a sounding reference signal (SRS) to be transmitted by the first radio terminal (25; UE₁) during a defined time interval (47) covering a frequency range (F) that comprises at least one resource block (RB).

2. Method (49) according to claim 1, wherein the radio transmission resources are uplink transmission resources (39).

3. Method (49) according to claim 1 or 2, wherein the indicating the portion of radio transmission resources (39) comprises informing the second radio terminal about a time interval (41, 43) during which the beacon signal (SRS) shall be transmitted.

4. Method (49) according to one of the precedent claims, wherein the method (49) comprises receiving (61) from the at least one second radio terminal (25; UE₂, UE₃, UE₄, UE₅) measurement data (M) describing a signal received by the second radio terminal (25; UE₂, UE₃, UE₄, UE₅) on the indicated portion of radio resources and estimating a quality of a device-to-device channel (29) between the first terminal (25; UE₁) and the second terminal (25; UE₂, UE₃, UE₄, UE₅).

5. Method (49) according to claim 4, wherein method (49) comprises estimating, depending on the measurement data (M), an interference of communication performed on the device-to-device channel (29) on at least one further channel (27, 29) depending on the measurement data (M).

6. Method (49) according to claim 4 or 5, wherein the method (49) comprises assigning (67) radio resources to communication channels (25, 27) of the network (11) depending on the estimated channel quality (P) and/or the estimated interference (IC, ID).

7. Method (49) according to one of claims 4 to 6, wherein the method (49) comprises deciding (69) on whether communication between radio terminals (25) shall be carried out on a device-to-device channel (29) or a cellular channel (27), wherein said deciding (69) depends on the estimated channel quality (P) and/or the estimated interference (IC, ID).

8. Method (49) according to one of the precedent claims, wherein the sounding signal is a sounding reference signal (SRS) according to the specification of the Evolved Universal Terrestrial Radio Access.

9. Network element (20, 21) for a wireless network (11), the network element (20, 21) being operable for
- instructing (55) a first radio terminal (25; UE1) to transmit a beacon signal; and
- indicating (57) a portion of radio transmission resources (39) occupied at least partially by the beacon signal to at least one second radio terminal (25; UE2, UE3, UE4, UE5);
wherein the network element (20, 21) is further operable for subdividing the radio transmission resources according to frequency and time into multiple resource blocks (RB) and wherein the beacon signal is a sounding reference signal (SRS) to be transmitted by the first radio terminal (25; UE₁) during a defined time interval (47) covering a frequency range (F) that comprises at least one resource block (RB).

10. Network element (29, 21) according to claim 9, wherein the network element (20, 21) is operable, preferably programmed, for executing a method (49) according to one of claims 1 to 8.

11. Method (73) for network assisted beaconing in a wireless network (11), the method (73) comprising
- receiving (77) an instruction (I) indicating a portion of radio transmission resources (39) occupied by a beacon signal (SRS);
- receiving (85) a signal on the portion of radio transmission resources indicated in said instruction (I); and
- transmitting measurement data (M) that characterize the received signal;
wherein the radio transmission resources (39) are subdivided according to frequency and time into multiple resource blocks (RB) and wherein indicated portion of radio transmission resources covers a frequency range (T) that comprises at least one resource block (RB).

12. Method (73) according to claim 11, wherein the signal is received from a terminal (25) of the network (11) and wherein the measurement (M) data comprise a channel quality indicator (CQI) describing the quality of a channel (29) to the terminal (25).

13. Radio terminal (25) for a wireless communication network, wherein the terminal is operable for
- receiving (77) an instruction (I) indicating a portion of radio transmission resources (39) occupied by a beacon signal (SRS);
- receiving (85) a signal on the portion of radio transmission resources indicated in said instruction (I); and
- transmitting measurement data (M) that characterize the received signal;
wherein the radio transmission resources (39) are subdivided according to frequency and time into multiple resource blocks (RB) and wherein indicated portion of radio transmission resources covers a frequency range (T) that comprises at least one resource block (RB).

14. Radio terminal (25) according to claim 13, wherein the radio terminal (25) is operable, preferably programmed, for executing a method (73) according to claim 11 or 12.

15. Wireless network (11) comprising a network element (20, 21) according to claim 9 or 10.
